# EUROPEAN PATENT APPLICATION

(11) **EP 0 612 951 A1**
(43) Date of publication of application: **31.08.1994**
(21) Application number: 94301062.9
(22) Date of filing: 14.02.1994
(51) Int. Cl.: F16L 37/14

(54) **Hydraulic connection devices**

(30) Priority: 26.02.1993 GB 9303905
(71) Applicant: LONGWALL ROOF SUPPORTS LIMITED, Ince, Wigan WN1 3DD (GB)
(72) Inventor: Elliott-Moore, Peter, Alsager, Nr. Stoke-on-Trent (GB)
(74) Representative: Higgins, Michael Roger

(57) **Abstract**

A connection device for making a hydraulic connection comprising a male connector (4), a female connector (2) adapted to receive the male connector so as to allow fluid communication therebetween, and a retaining staple (6) for retaining the male connector within the female connector. The retaining staple comprises two arms (32) connected together at one end thereof, and the female connector defines two passageways (24) adapted to receive the two arms of the retaining staple, the arms being adapted, when received within said two passageways, to engage with the male connector so as to retain the male connector within the female connector. At least one of the arms (32) is provided with a locking recess (38) or projection adapted to engage with the male or female connector in such a way as to allow removal of the locking staple, when the connection device contains hydraulic fluid under pressure, only after movement of the male connector further into the female connector against the action of the hydraulic fluid under pressure.

## Description

The invention relates to hydraulic connection devices, and particularly to hydraulic connection devices for use with hydraulic equipment in underground mines.

A known connection device for making a hydraulic connection comprises a male connector adapted to be connected to an end of a hydraulic hose, a female connector adapted to receive the male connector, and a retaining staple for retaining the male connector within the female connector. The female connector may be connected to, or form part of, a piece of hydraulic equipment. Alternatively, two female connectors may be arranged back-to-back to form a double female connector which can be used to connect two hydraulic hoses, each provided with a male connector, together. In either case, the female connector comprises a generally cylindrical bore for receiving the generally cylindrical male connector. Furthermore, the female connector is provided with two passageways arranged perpendicular to, and intersecting with, the cylindrical bore. The male connector is provided with an annular circumferential groove which aligns, and intersects with, said two passageways when the male connector is inserted into the female connector. The male connector is retained within the female connector by passing the two arms of the staple through the two passageways formed by the female connector, so that the two arms engage within the annular groove of the male connector.

In order to ensure that the staple remains in position once inserted into the two passageways of the female connector, the two arms of the staple, which are generally parallel, are shaped so as to curve slightly away from one another at their free ends. The two arms of the staple must therefore be pushed slightly together before insertion into the two passageways of the female connector. However, once the free ends of the arms of the staple emerge from the other ends of the two passageways of the female connector, the two free ends of the two arms of the staple are free to move part slightly, thus retaining the staple in position.

The pressures used for hydraulic equipment can be considerable, and it can therefore be highly dangerous to remove the staple while the fluid within the connection device is under pressure. This is particularly hazardous in view of the fact that the male and female connectors are made of metal and can be of substantial weight. If a staple is removed while a hydraulic hose is under pressure, the male and female connectors may fly apart and cause substantial damage and injury.

The invention seeks to overcome some of the disadvantages of the prior art.

According to the invention there is provided a connection device for making a hydraulic connection, comprising a male connector, a female connector adapted to receive the male connector so as to allow fluid communication therebetween, and a retaining staple for retaining the male connector within the female connector, the retaining staple comprising two arms connected together at one end thereof, and the female connector defining two passageways adapted to receive the two arms of the retaining staple, the arms being adapted, when received within said two passageways, to engage with the male connector so as to retain the male connector within the female connector, wherein at least one of the arms is provided with a locking recess or projection adapted to engage with the male or female connector in such a way as to allow removal of the locking staple, when the connection device contains hydraulic fluid under pressure, only after movement of the male connector further into the female connector against the action of the hydraulic fluid under pressure.

It will be appreciated that when the connection device contains hydraulic fluid under high pressure, and is therefore potentially particularly dangerous, manual removal of the retaining staple is rendered practically impossible in view of the large force which would be necessary to force the male connector towards the female connector against the action of said pressure.

The connection device preferably further comprises resilient means for biasing the male connector away from the female connector even when there is no hydraulic pressure within the connection device.

With such a resilient means ensures that even when there is no hydraulic pressure within the connection device the retaining staple can only be removed after first moving the male connector further into the female connector against the action of the resilient means. This prevents accidental removal of the retaining staple.

It will also be appreciated that such a resilient means enables the retaining staple, when inserted into said passageways, to snap into a locking position in which said recess or projection engages with the male or female connector so as to resist removal of the retaining staple.

Such a snapping action is particularly convenient to use, since the user can hear and feel the snap and therefore knows exactly when the retaining staple is in its locking position.

Conveniently, the resilient means is a wave washer. That is, a washer defining a wave shape around its circumference, and which behaves resiliently when compressed between two surfaces.

Retaining means may be provided for retaining the resilient means either within the female connector or on the male connector.

For example, the female connector or the male connector may be provided with projections or a shoulder for retaining the wave washer in position.

Preferably, said recess or projection is provided on both arms of the retaining staple.

Conveniently, at least one arm of the retaining staple is provided with a part circular recess of complementary shape to, and adapted to receive, a portion of a cylindrical surface extending around the male connector.

Said two passageways preferably intersect with a bore within the female connector adapted to receive at least a portion of the male connector.

Desirably, the two arms of the retaining staple are generally parallel to one another.

At least one of the arms of the retaining staple may be provided with a tapered or pointed free end so as to facilitate insertion of said one arm into a respective passageway.

It will be appreciated that a retaining staple as described above could be used with an existing known connection device comprising male and female connectors. Accordingly the invention includes within its scope a retaining staple as described above.

The invention further includes within its scope such a retaining staple in combination with resilient means as described above.

The invention will now be more particularly described, by way of example only, with reference to the accompanying drawings, in which:
Figure 1 is a sectional view through a connection device;
Figure 2 is a plan view of the retaining staple of the connection device; and
Figure 3 is a cross-section along the line A-A of Figure 2.

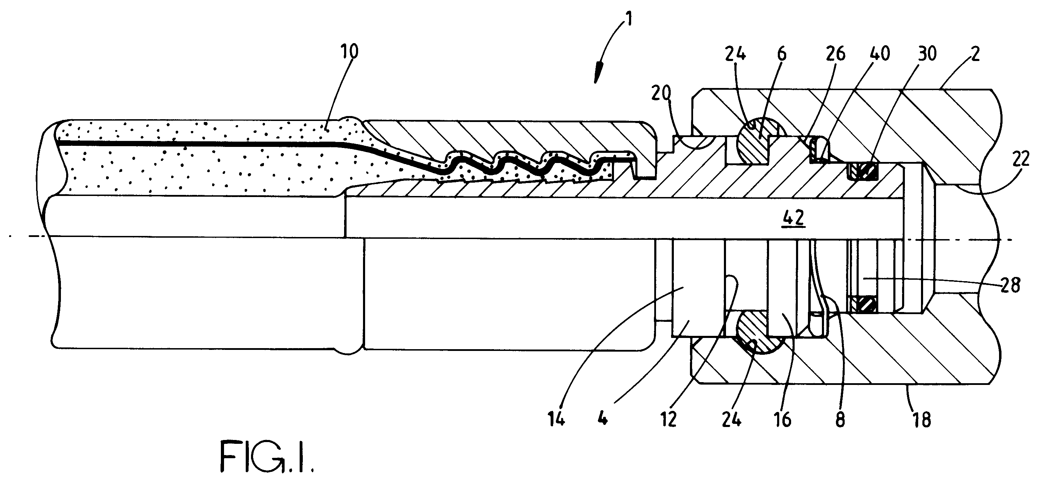

Referring to Figure 1, the connection device 1 comprises a female connector 2, a male connector 4, a retaining staple 6, and a wave washer 8. The male connector 4 is connected to a hydraulic hose 10, and comprises an annular groove 12 defined between a first annular projection 14 and a second annular projection 16.

The female connector 2 comprises a cylindrical outer surface 18, a first cylindrical bore 20, and a second cylindrical bore 22 of smaller diameter than the first cylindrical bore 20. Two passageways 24 extend completely through the female connector 2 from one side to the other. The passageways 24 are parallel with one another, and intersect with the first cylindrical bore 20.

The second annular projection 16 of the male connector 4 is formed with a tapered edge 26 which assists insertion of the male connector 4 into the female connector 2. The male connector 4 is also provided with a second annular groove 28 which contains a rubber seal 30.

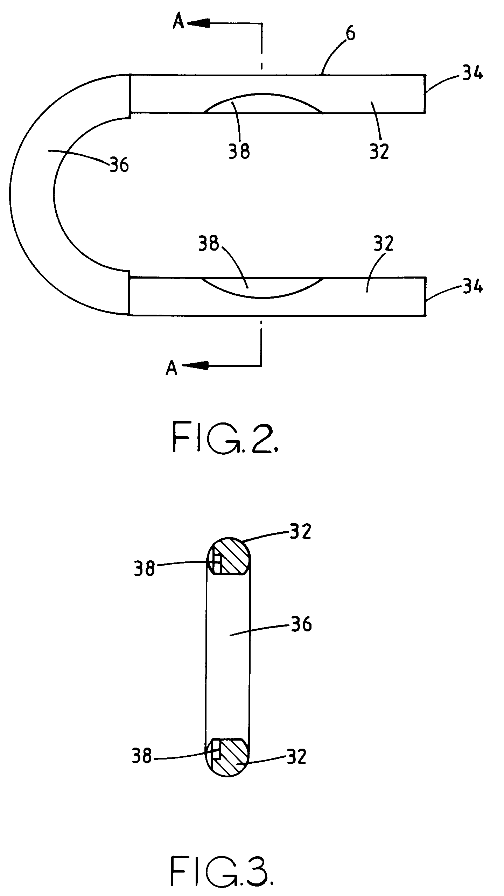

The retaining staple 6 is shown in greater detail in Figure 2 and 3. The retaining staple 6 comprises two arms 32, each having a free end 34, the arms being connected together by a semi-annular connecting portion 36. Each arm 32 is provided with a circular recess 38 having the same diameter as the second annular projection 16 of the male connector 4.

In operation, the male connector 4 is inserted into the female connector 2 as shown in Figure 1. The wave washer 8 is retained on the male connector 4 by means of projections 40 provided on the wall of the male connector 4. The arms 32 of the retaining staple 6 are then inserted into the passageways 24 defined by the female connector 2. In order to pass the arms 32 through the annular groove 12 of the male connector 4 it is first necessary to press the male and female connectors 4 and 2 together against the biasing action of the wave washer 8 so as to ensure that the annular groove 12 aligns with the passageways 24. The arms 32 are then pushed through the annular groove 12 until the second annular projection 16 of the male connector 4 snaps into the recesses 38 provided on the arms 32. It will be appreciated that the retaining staple 6 can then only be removed by first pressing the male and female connectors 4 and 2 together against the biasing action of the wave washer 8.

Furthermore, once the hydraulic hose 10, the bore 42 through the centre of the male connector 4, and the second cylindrical bore 22 of the female connector 2 are all filled with hydraulic fluid under pressure, it will become particularly difficult to force the male connector 4 further into the female connector 2, thus preventing accidental removal of the retaining staple 6.

It will be appreciated that other embodiments of the invention are possible. For example, the arms 32 could be provided with projections instead of, or in addition to, the recesses 38. The passageways 24 and/or the annular projections 16 and 14 could be provided with one or more projections (or recesses) on their walls adapted to engage with complementary shaped recesses (or projections) formed on the arms 32 in such a way that removal of the retaining staple 6 requires the male connector 4 to be first moved towards the female connector 2.

## Claims

1. A connection device for making a hydraulic connection, comprising a male connector (4), a female connector (2) adapted to receive the male connector so as to allow fluid communication therebetween, and a retaining staple (6) for retaining the male connector within the female connector, the retaining staple comprising two arms (32) connected together at one end thereof, and the female connector defining two passageways (24) adapted to receive the two arms of the retaining staple, the arms being adapted, when received within said two passageways, to engage with the male connector so as to retain the male connector within the female connector, characterised in that at least one of the arms is provided with a locking recess (38) or projection adapted to engage with the male or female connector in such a way as to allow removal of the locking staple, when the connection device contains hydraulic fluid under pressure, only after movement of the male connector further into the female connector against the action of the hydraulic fluid under pressure.

2. A connection device as claimed in claim 1, further comprising resilient means (8) for biasing the male connector away from the female connector even when there is nu hydraulic pressure within the connection device.

3. A connection device as claimed in claim 2, wherein the resilient means is a wave washer (8).

4. A connection device as claimed in claim 2 or claim 3, wherein retaining means (40) are provided for retaining the resilient means either within the female connector or on the male connector.

5. A connection device as claimed in any one of the preceding claims, wherein said recess (38) or projection is provided on both arms (32) of the retaining staple.

6. A connection device as claimed in any one of the preceding claims, wherein at least one arm of the retaining staple is provided with a part circular recess (38) of complementary shape to, and adapted to receive, a portion of a cylindrical surface extending around the male connector.

7. A connection device as claimed in any one of the preceding claims, wherein said two passageways (24) intersect with a bore (20) within the female connector adapted to receive at least a portion of the male connector.

8. A connection device as claimed in any one of the preceding claims, wherein the two arms (32) of the retaining staple are generally parallel to one another.

9. A connection device as claimed in any one of the preceding claims, wherein at least one of the arms (32) of the retaining staple is provided with a tapered or pointed free end so as to facilitate insertion of said one arm into a respective passageway.
